# EUROPEAN PATENT APPLICATION

(11) **EP 1 793 560 A1**
(43) Date of publication of application: **06.06.2007**
(21) Application number: 06124254.1
(22) Date of filing: 16.11.2006
(51) Int. Cl.: H04L 29/08, H04M 7/00

(54) **Distributed communication through media services**

(30) Priority: 02.12.2005 US 293481
(71) Applicant: Inter-Tel, Inc., Tempe, Arizona 85281 (US)
(72) Inventor: Gallick, Robert, Phoenix, AZ 85023 (US); Ambrose, Toby, Tempe, AZ 85283 (US)
(74) Representative: Curley, Donnacha John

(57) **Abstract**

A communication system (100) using Media Services (MS) routes all types of communications to and from the user through the user's MS and not directly to the user's associated endpoints. The MS is a dedicated application for each user and may be a subscribed-to service and a license fee may be charged relative to the service and/or the user-selected preferences for communication control.

## Description

### Field of Invention

The present invention relates generally to distributed communication through media services and, in particular, utilizing a distributed architecture for communications and routing communications, regardless of kind, through a personal media service.

### Background of the Invention

Modern telecommunication systems are typically centered on one or more central processing components controlling and monitoring a large number of endpoints. This architecture is exemplified by most modern PBX or central office switch networks. For reliability, there is often more than one controller in case of a failure in the main processing hardware or software. The systems are often connected to other such systems in a hierarchy. In the PSTN, these systems are interconnected with a protocol based network such as SS7. For enterprises, the PBX often interconnects to the PSTN via in-band trunk signaling.

In recent years there has been a shift of intelligence from the mainframe to other elements within the network. This is evident in the immergence of VoIP phones in which the phone is capable of complex signaling and audio conversion functions. Even though these "smart" endpoints are capable of peer to peer communications, they still rely on numerous supporting central processing elements such as register servers, redirect servers, and proxy servers to identify and route communications between endpoints. Additionally, the endpoints often rely on centralized media conferencing servers.

There have also been some attempts at self registration and identification of endpoints on the network. These types of systems are typically limited in size and the functionality of the endpoints is basically static. In other words, the features and feature interaction of the endpoints is dictated by common software used across the network. Users are not able to have different features on their endpoints from the other endpoints in the system. As with the other centralized-type systems, users attempt communication directly to another endpoint from their endpoint, e.g., via telephone number or IP address. Typically in VolP systems, the addressing is by redirect servers, proxy servers and similar elements that the end user has registered with.

Distributed communication systems were designed to improve call processing response by spreading the load across multiple processing nodes. One benefit is that the user can connect from various geographic locations and still tap into the processing power of any number of clustered system member nodes. These types of systems are also used to support the needs of mobile users who are sporadically connected to a network. Batch-oriented processors advantageously take over selected services for the mobile user when the user is not signed on. However, the clustering requirements demand that the same processing software be replicated across the serving nodes, thus limiting functional variations of features that are available to users.

Standards covering a user's "presence" such as RFC 2778 (Internet Society Network Working Group, 2000) employ services that operate like interconnected agents to keep track of each subscriber's physical location. Through coordination between various services such as Watchers, Pollers, and Fetchers, notifications are sent to subscribers to keep track of their peer's presence information.

Unfortunately, the standard covers operational characteristics that are basically limited to keeping track of peers listed on separate buddy lists and is not capable of routing real time call requests for subscribers.

Enhancements to presence services were offered in 2004 by the Internet Engineering Task Force (IETF). One of these is SIMPLE (SIP (Session Initiation Protocol) for Instant Messaging and Presence Leveraging). Created by the IETF SIMPLE working group, it is used to combine the location capabilities of instant messaging with the real-time calling capabilities employed by SIP. This standard works well for setting up basic telephone calls, single-level call forwards, and presence data, but more advanced routing preferences as required by mobile users, who use a variety of endpoint devices, are not supported. These standards do not support distributed agent-based services that are pre-programmed with specific rules and logic to process conditional call handling as specified by users or subscribers.

An improved communication system is needed to allow users to be mobile and still retain the type of service that was prearranged with a personalized routing algorithm or call handling scenario. Preferably the system will be flexible enough to handle various types of protocols and standards using a variety of endpoint devices. Additionally, it is desirable to have a communication system that accepts personalized communication rules from users as well as rules defined by the enterprise.

### Brief Description of the Drawings

These and other features, aspects, and advantages of the present invention may be best understood by reference to the following description taken in conjunction with the accompanying drawings, wherein like reference numerals indicate similar elements:
Figure 1 illustrates an exemplary media services communication system in accordance with the various embodiments;
Figure 2 illustrates an exemplary media services registration screen 200 as viewed by a user;
Figure 3 illustrates an exemplary media services communication system in accordance with one particular conferencing embodiment; and
Figure 4 is an exemplary chart of the various messages passed in a distributed communication system using media services.

### Detailed Description

A communications system is described which includes distributed communication through Media Services ("MS"). The system facilitates processing of live (or initially live then deferred) communications from one point to another using a real-time packet protocol such as RTP/IP, ATM, UDP/IP. All communications attempts are intended to put system subscribers in instant contact with each other. During the communications process, information is exchanged via a distributed architecture supported by one or more of the subscriber's MS through which communications traffic is processed. Subscribers may be mobile or stationary and may provide their current presence data to facilitate improved communications via their subscribed to MS. System subscribers and their MS may be located anywhere on a communications network. It is also possible for the MS to communicate with each other during the absence of actual users to process deferred communications and route calls as previously directed by the users.

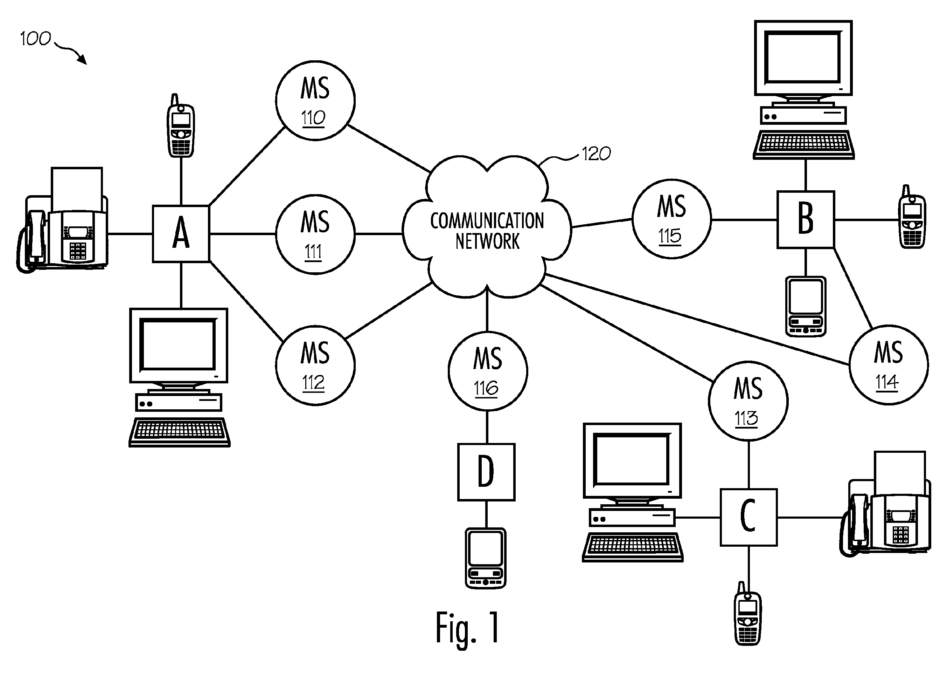

Figure 1 illustrates a communication system 100 that is suitable for supporting a plurality of Media Services ("MS") 110-116 as described herein. In the illustrated example, packets of information from the MS flow through a communication network 120 using, for example, network protocols in a standard manner. Each MS may support a variety of communications protocols, e.g., SOAP (Simple Object Access Protocol) and SIP (Session Initiation Protocol) standards. Each MS runs on a public or private network and can be accessed by the subscriber who is associated with it. In an enterprise implementation, the user may have an associated MS on the private network and another MS on the public network, such as the Internet. This type of configuration permits isolation for security purposes but also provides redundancy using alternate applications that can be hosted on different platforms and different networks. Accordingly, it should be realized that network 120 may include one or more types of communicating networks. Another benefit of the communication system using media services is that the user or subscriber of the media service is able to carry the media service with them as they may travel from enterprise to enterprise. The personal media service may be part of one or more larger enterprises as needed by the user. For example, a consultant using a media service may be able to connect the media service with each individual company the consultant is working for without disrupting any communication service or having to reprogram any features of the personal media service. Internal mechanisms can be programmed so the MS applications belonging to a user can synchronize with each other and even on a continuous basis without user interaction.

Each MS 110-116 is a dedicated application for each subscriber, however, the subscriber may have more than one MS. For example, in Figure 1, subscriber A has three media services, MS 110-112, while subscriber C has a single service, MS 113. Additionally, the subscriber may have an established MS for each type of network with communications available between the various applications, as discussed herein. Each MS may be a web based application that belongs to a single user, and contains both web protocol interfaces such as HTTP and communication protocol interfaces such as SIP. The MS may include, among other items, data stores of interest to that user, processing bgic for specialized processing of communications, status state information pertaining to current communication interactions, queues pertaining to current communications demands, synchronization mechanisms for interacting with other services belonging to the user, and various other algorithms providing both features and function. The MS may be loaded with a wide variety of processing instructions and/or routing options, subscribed to by users. Computer web servers, communications software systems, packet data transport using a variety of standard data formats, and digital network infrastructure may be used to support transmission of communications information between endpoints.

The subscriber may have one or more user communication endpoints associated to and communicating with the MS. A variety of endpoints are suitable for system 100 and include, for example, workstations, desktop appliances, and mobile units. Preferably, the endpoints can support real-time communications and process multimedia and associated messages. The MS may be set up with options to provide processing features for a variety of endpoint types. In addition, the endpoints can all be online at once or none of them need to be online for the user to receive processing benefits from the MS.

Users who routinely establish a presence at a variety of locations and endpoint devices may conveniently subscribe to a single MS. In this manner, communications to and from the user are directed to a single source, the MS. This is especially handy for those attempting to communicate with the user when the user's exact presence is not immediately known. This avoids having to make several communication attempts to multiple devices before finding the user.

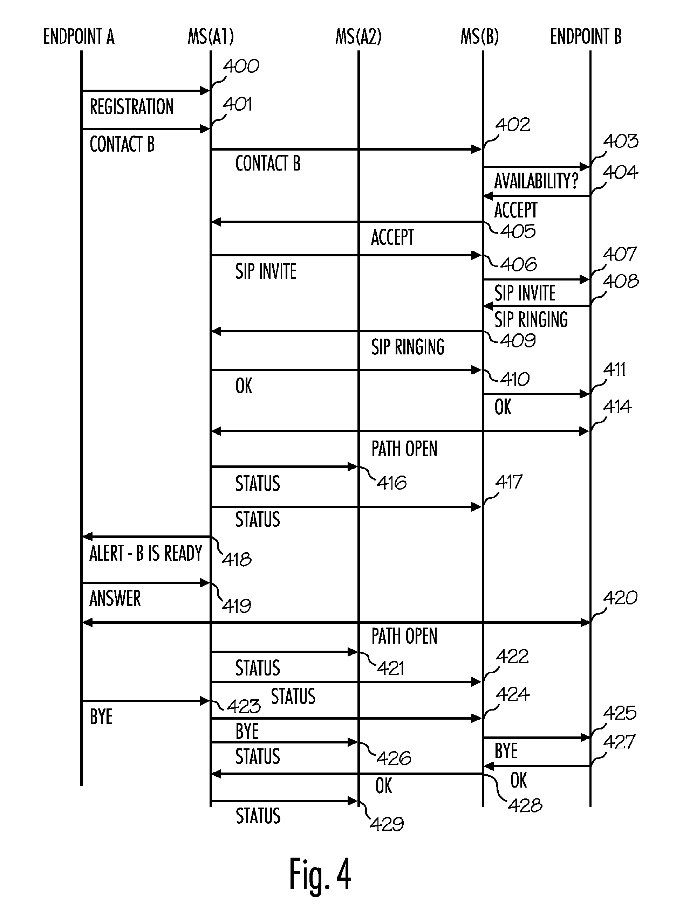

To communicate with a user subscribing to the system, contact is attempted via the user's MS and not directly to the user's endpoint. For example, if user A desires to communicate with user B, then A would contact either MS 114 or 115 belonging to B depending upon which MS user B has designated for the type of communication between A and B (e.g., public or private networks; personal or business communications; etc.). In this manner, A does not need to "track down" B's whereabouts by attempting contact with any one of B's endpoints directly or even through a proxy or redirect server because these identities, which may exist on the system, are not used to communicate between users having their own MS. Thus, phone calls, emails, faxes, instant messages and so on are directed to the user's MS and not to a particular user endpoint device. The MS may be conveniently accessed as a web service but it should be understood that the MS has capabilities beyond a traditional web-centric entity. Figure 4 and the accompanying description further discuss the operational messages during initialization of communication.

The MS applications can run on any platform with connectivity to the larger network. This would include local personal computers, phone instruments, set top boxes, or wireless hand-held communication devices, for example. These MS applications can transfer current addressing information and synchronize independently of client activities. They may communicate in the background and remain up even after the clients stop communicating in real time. Of course, such operational modes are dependent on the subscribed services and rules defined when the MS applications are initialized.

The subscriber may have the option to define the MS for the user's particular purposes. The user may define custom calling features and call processing to enhance a simple routing scheme. For instance, a call processing specification may be designed by a consulting service, paid for by a user, and loaded into the user's MS to define complex call processing algorithms to customize its operation. Once the MS is established on behalf of a user or enterprise, the process may continue for the life of the subscription and may be modified as required. The user may be subscribing to multiple MS applications and can adapt each MS to suit the user's communication needs. Information may be passed from the MS to the user via a protocol like SOAP. Alternatively, a web application may push an HTML form back to the user for completion.

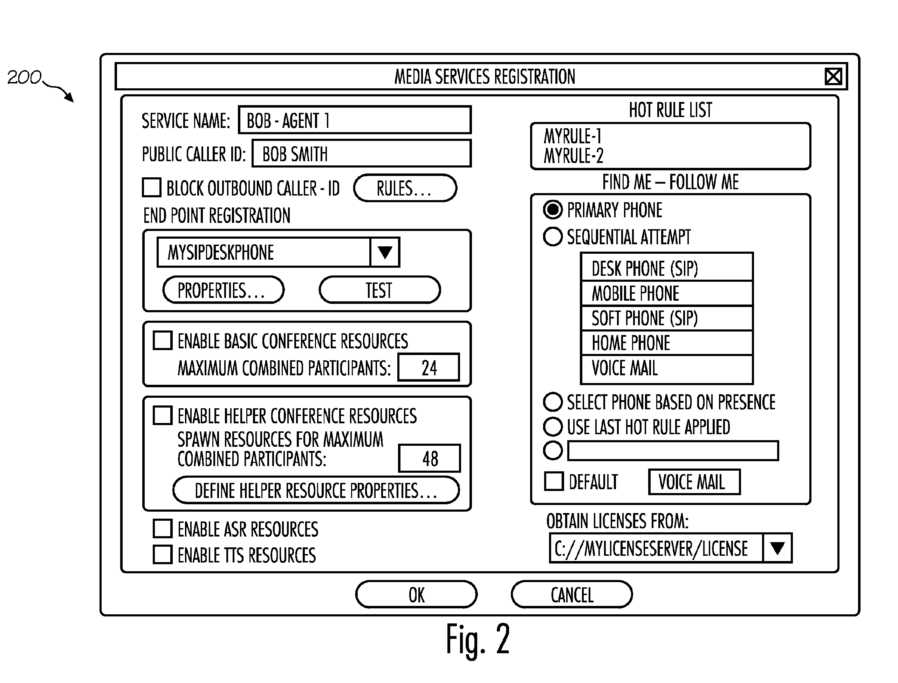

Figure 2 illustrates an exemplary registration screen 200 viewed by the user to activate a new MS on the network or to edit an existing MS. In one embodiment, screen 200 may be from a web-based application. The user may select a service name for display purposes when interacting with this agent. The user may have multiple media services established and the service name can provide a simple means for the user to discriminate between the user's available services. In the present example, the service name for this MS is "Bob-Agent 1 ". Preferably, if the user attempts to name another MS with the same name, the name is rejected with an appropriate error message. Since the MS will be communicating with other devices on the network, a name to be displayed to others during communications may be entered as shown in Figure 2 (identified as "Public Caller-ID"). The user may optionally block outbound caller-ID. More detailed rules such as "only block caller-ID to calls outside the internal network" may be defined by selecting a rules button. The details of a filtered caller-ID blocking are generally known techniques and are not described in detail here.

As previously mentioned, the user can have one or more endpoint devices associated with a single MS. Recall that communication with the user is generally not directed to the user's endpoint device, but rather is made to the user's MS. Thus, the user is requested to register each endpoint device that the user desires to be associated with that particular MS. The user may choose to register a single device or multiple devices of similar or varying types. The various endpoints and their capabilities are typically hidden from the other users on the network.

The MS may have usage or license charges associated. Exemplary charges may include registering, and paying for, the maximum number of concurrent users allowed in an ad-hoc conference, user-selected communication control preferences, encoding/encryption methods applied, or other media processing licenses. Some of these may have flat rate charges and some may have charges based on the time or type of usage. User selected preferences for communication control may be available as a set of stock preferences for selection or may be custom-defined for the user. In the case of conferencing resources, speech resources, encoding/encryption, and other such licensable algorithms, the user may have to register for dynamically acquired licenses. These licenses may be obtained and logged at one or more licensing servers and added to the appropriate MS. The illustrated example identifies a pull down menu for the user to select stored licenses.

For normal conferencing services, a fixed number of resources may be licensed and allocated to the user. Some of the resources may be available from a pool and not dedicated to the user. The maximum default number of such resources may be defined by the user and inputted as a number. Typically, this number can not be greater than the number of actual resources available on the system. In the present example, this particular MS registration permits a maximum number of twenty four participants for conferencing.

In one particular embodiment, the MS is capable of increasing resources as may be needed in a communication setting. Needed resources may include, but not limited to, additional multicast channels, conference channels, speech processors, protocol converters, etc. These resources may be present on additional computer servers or called as additional processing resources on a local server system. In one particular embodiment, a spawning agent may reside on a remote platform to allow sufficient resources to be available for them to spawn the required helper MS. Conferencing capacity is a good example of a resource which is often limited by the processing capability of the server. In the event the user needs more resources than are available on the server their MS is executing on, the architecture provides for the MS to spawn additional or helper media services to provide additional processing resources. For example, the illustrated MS registration may spawn resources as needed to enable up to forty eight conference participants. If the MS is registered to spawn helper media services, the type of helper MS and its network address is typically specified.

Just as additional conferencing resources may be spawned, additional speech resources may also be spawned as helper MS. For example, additional registered resources may include Automatic Speech Recognition (ASR) and Text To Speech (TTS). It should be realized that various types of additional resources are contemplated and may be available through a helper MS. The embodiments described herein are provided for illustrative purposes and not meant to be limiting.

The system is also capable of following detailed "hot rules" for routing logic conditions that have been defined by the user. A hot rule is basically a routing rule without the "who" and "when" aspects; therefore just a list of steps. Hot rules may be applied to a ringing, incoming or otherwise active communication. A simple example of a hot rule executed with a single step is "send to voice mail." The user may decide not to engage in an incoming communication request and can easily execute the hot rule to send the request to voice mail.

The hot rule may be executed by the user on demand using a variety of methods. Hot rules may be exposed to the user from a list displayed on the endpoint. For example, a user interface may permit the user to select a hot rule to be applied to an active call appearance on the endpoint. For example, hot rules may be programmed to individual buttons if the user has one or more hot rules. When the user programs this feature, he may be presented with multiple options, such as automatically execute the rule or receive a prompt to execute the hot rule. The hot rule may, for example, be a soft key at the endpoint or a pop up window on a personal computer such as in a tray application. In one particular embodiment, the hot rule may be accessed via a drop-down list of hot rules programmed for the user.

Users licensed for basic call routing capabilities may have access to a number of stock hot rules that are routinely created when their account is registered. Stock hot rules may be "as is" and users do not have the ability to edit them.

Alternatively, levels of licenses may be provided such that advanced licensees may have access to stock hot rules but in addition have the ability to edit the stock hot rules and create new rules.

As an example, to apply a previously registered hot rule from the endpoint's perspective, the user can click on a hot rule button to apply a hot rule to the call. This action brings up a pop-up menu listing the user's hot rules. The user can select a hot rule from the menu to apply the rule to an incoming communication. The user may also make a selection to apply the same hot rule to a current call that was applied to the previous call.

Screen 200 further illustrates the registration of predefined routing rules which may include routing treatment of a call or defined communication. Additional rules may be dropped onto this list and existing rules may be conveniently deleted or edited. These rules may automatically be applied to an incoming communication request (e.g., Find Me - Follow Me options shown). Other options may allow for more elaborate routing rules to respond to a user's current presence information and route the call as needed.

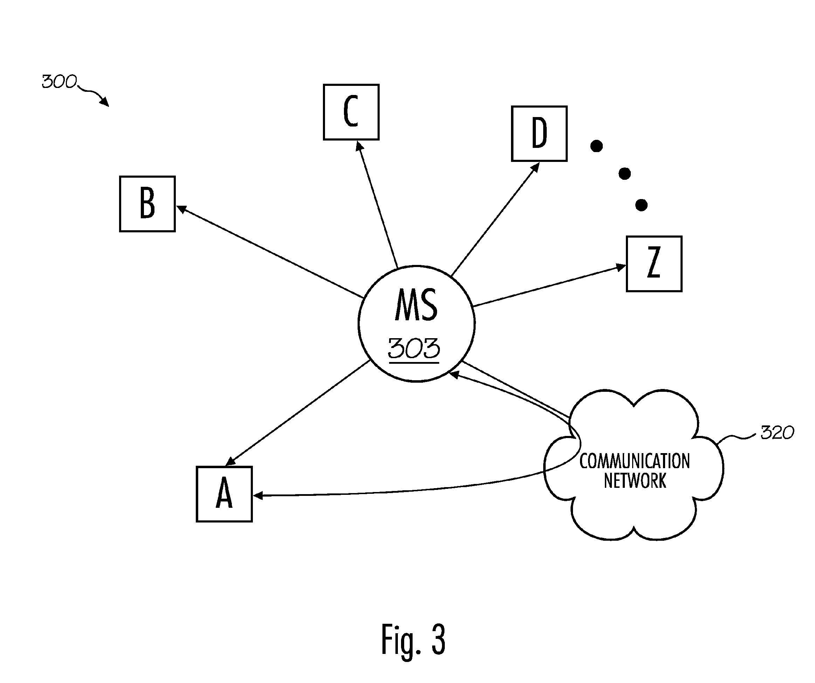

Figure 3 illustrates an embodiment of a communication system 300 in accordance with the media services described herein. In particular, system 300 depicts a conferencing example with multiple participants and the ability to support multiple protocols. For instance, if user A wants to provide a company-wide conference to all of the employees, then it is conceivable that there may be hundreds of listeners. In one particular embodiment, user A can place a call to their own MS 303 and enable outgoing audio streams to be accessed by other users. Depending on the contents of the conference, user A may wish to add the appropriate security access measures to ensure only company employees listen.

The participants may access the MS as web service, a SIP VoIP connection, a web page with audio connection (streaming audio) or a variety of other protocols.

The configuration of Figure 3 also enables MS 303 to spawn helper media services as previously discussed. For example, MS 303 may stream the conference to a helper MS (not shown) which in turn rebroadcasts the conference to users accessing the helper. Once the conference is over, the helper MS may be automatically expunged by MS 303. In this manner, MS 303 is capable of creating and freeing up additional resources on its own.

The following description and accompanying message chart is provided to better understand the various steps of operation of the methods for distributed communication through media services, as described herein. It should be realized that the following description is not intended to be limiting but rather to provide a further description of the various steps and possible embodiments. It should be appreciated that additional steps may occur that are not represented on the following chart but are discussed in the conjoining text or elsewhere herein. Moreover, there may be operations, functions, routines, and the like that are not depicted on the chart or elsewhere but are well understood in the industry as common actions for a communications system. Unless specifically stated, the order of the depicted and described operations is not limited to the description.

Figure 4 is an exemplary chart of the various messages passed in a distributed communication system using media services. In particular, Figure 4 shows exemplary message flows using media services to initiate communication. In this example, user A has two media services, MS(A1) and MS(A2), and user B has a single media service, MS(B). As previously indicated, user A registers with its respective media service(s) (step 400). Although not shown, typically there is a handshake between the media service and the user's endpoint (e.g., MS(A1) and endpoint A). User A initiates the contact request to user B by sending a message from endpoint A to MS(A1) (step 401). Since MS(A1) belongs solely to user A, it may be customized to receive any message that is from A or A's registered endpoint. As previously discussed, endpoint A may communicate to MS(A1) using SOAP, web service invocation techniques, or a simple HTTP message from endpoint A to MS(A1) where MS(A1) is acting as a server side application to endpoint A. The result is user A, through endpoint A, has indicated to its MS that it would like to contact user B irregardless of B's whereabouts and current usable endpoint.

MS(A1) may use normal web name search lookup techniques to communicate to MS(B). Alternatively, MS(A1) may include a directory of contacts for A that is referenced for lookup by user A or MS(A1). MS(A1) indicates to MS(B) that A would like to contact B (step 402). MS(A1) and MS(B) may appear as web services to each other and communicate using web service techniques. Web service techniques are generally well understood and will not be described in detail herein. However, it should be understood that although web services do not normally store status state information, one unique advantage of the MS is that it can store this type of information.

MS(B) queries endpoint B for availability and presence availability (step 403). Availability may be two-fold and include the availability of the endpoint and the availability or desire of the user to receive communications. If endpoint B is available, then in one particular embodiment, the caller-ID information for A is communicated to B so B can determine whether to accept a communication request from A. Endpoint B communicates an acceptance of the communication request with user A to MS(B) (step 404). MS(B) returns the acceptance of communication to MS(A1) (step 405).

In one particular embodiment, MS(A1) receives the acceptance for communication with B and issues a SIP invite to MS(B) (step 406). MS(B) then issues the SIP invite to endpoint B (step 407). Endpoint B responds to MS(B) with a SIP ringing (step 408). MS(B) then communicates to MS(A1) with a SIP ringing (step 409). MS(A1) responds to MS(B) with an OK message (step 410) and MS(B) communicates the OK to endpoint B (step 411).

A communication path is then open between MS(A1) and endpoint B (step 414). During the connections with MS(A1) and endpoint A, endpoint B may play or display a message or music from MS(A1). The change in status of MS(A1) is preferably communicated to A's other MS, MS(A2) (step 416). This is useful for other endpoints communicating with MS(B). Additionally, the status change of MS(A1) may be communicated to MS(B) (step 417). MS(A1) alerts endpoint A that contact with B is ready (step 418). Even though A initiated the original contact with B, the contact now appears as an incoming communication request to A through MS(A1) to endpoint A. For example, the alert to A that B is ready for communication may include a ringing or visual indication at endpoint A. User A responds to the alert by whatever means is available at endpoint A, such as picking up the handset, initiating a soft key command, etc. (step 419). MS(A1) opens the communication path to endpoint A and the communication initialization is complete between endpoint A and endpoint B (step 420). The details of this last step are not shown but in this particular example may reflect that of a SIP transfer. MS(A1) updates the new status change of A and endpoint A to MS(A2) and MS(B) (steps 421 and 422, respectively).

Upon termination of the communications between A and B, endpoint A sends a "bye" message to MS(A1) (step 423). MS(A1) sends the bye message to MS(B) (step 424) which is then sent to endpoint B (step 425). Endpoint B returns an OK to the bye message to MS(B) (step 427), and MS(B) sends an OK to MS(A1) (step 428). Concurrently, status updates are sent from MS(A1) to MS(A2) (steps 426 and 429).

The above example is perhaps the simplest in nature between two endpoints. It should be realized that much more complex communication arrangements are available using the systems and methods for distributed communication through media services, e.g., those involving multiple media services associated with multiple endpoints.

Presented herein are various systems, methods and techniques for distributed communication through media services, including a best mode. Having read this disclosure, one skilled in the industry may contemplate other similar techniques, modifications of structure, arrangements, proportions, elements, materials, and components for communication through media services that fall within the scope of the present invention. These and other changes or modifications are intended to be included within the scope of the present invention, as expressed in the following claims.

## Claims

1. A Media Service (MS) for transceiving communications for a user, the MS comprising:
a web-based application dedicated to the user and accessible via an associated endpoint registered to the user and the MS over a communication network; and
a database storing a plurality of information comprising one or more associated endpoints registered to the user, and current presence data of the user and the associated endpoints,
wherein the user attempts communication with a second user by accessing the application via the network and requesting contact with the second user, the MS locates the second user and alerts the user of the second user's availability, the MS opens a communication path over the network between the associated endpoint registered to the user and an endpoint of the second user.

2. The Media Service of claim 1 wherein the database further comprises information for synchronization of two or more media services belonging to the user.

3. The Media Service of claim 1 further comprising a spawning agent for automatically contacting a second Media Service over the network when the MS requires additional communicating resources.

4. The Media Service of claim 1 wherein after the user requests contact with the second user, the user is online with the associated endpoint until the MS sends an alert to the associated endpoint of the second user's availability.

5. The Media Service of claim 1 further comprising a plurality of hot rules executable by the user from one or more of the associated endpoints for command of an incoming or active communication.

6. The Media Service of claim 5 wherein the user accesses the application to create, edit or delete one or more of the hot rules.

7. The Media Service of claim 1 wherein the database information further comprises user-selected preferences for communication control.

8. The Media Service of claim 1 wherein the information of one or more endpoints comprises a plurality of user-selected preferences for communication control at the endpoints wherein the user-selected preferences can vary among the endpoints registered to the user.

9. The Media Service of claim 1 wherein the database information further comprises a usage subscription having defined subscribed-to terms.

10. The Media Service of claim 1 wherein the MS is configured to connect to one or more larger enterprises without disrupting any of the capabilities of the MS.

11. A communication system for transceiving communications between a plurality of network subscribers, the system comprising:
a plurality of endpoints associated with the plurality of network subscribers;
one or more media services, each media service being dedicated to one of the network subscribers and comprising a database having a plurality of stored information including each of the endpoints associated to the subscriber and a plurality of subscriber-selected preferences for communication control; and
a communication network routing a plurality of communication data for the media services,
whereby a communication request for the subscriber is made by the subscriber at the endpoint associated to the subscriber to their respective media service, the media service of the requesting subscriber initiates communication on behalf of the subscriber to a second subscriber and opens a communication path between the endpoint associated to the requesting subscriber and an endpoint of the second subscriber.

12. The communication system of claim 11 wherein the media service comprises a web-based application and the communication network comprises the internet.

13. The communication system of 11 wherein at least one of the media services comprises a spawning agent for automatically contacting another media service over the network when the media service requires additional communicating resources.

14. The communication system of claim 11 wherein the stored information further comprises current presence data of the subscriber and of the endpoints associated to the subscriber.

15. The communication system of claim 11 wherein the media service further comprises a plurality of hot rules for command of the communication request.

16. The communication system of claim 11 wherein the media service is a paid-for subscription service and the subscriber-selected preferences are edited by the subscriber.

17. A communication method having a first and second media service, the media services comprising a dedicated application for each of a first and a second user, and at least one endpoint device for the user registered thereon, the method comprising:
at the first media service for the first user,
receiving a contact request to the second user from the endpoint device registered thereon;
locating an address for the second media service for the second user;
sending the contact request to the second media service for the second user;
receiving notification from the second media service indicating an availability of the contact request to the second user;
opening a communication path to the second media service;
notifying the first user endpoint device that contact is now ready to the second user;
receiving acceptance for contact from the first user endpoint device and opening the communication path to the first user endpoint device;
at the second media service for the second user,
determining a presence for the second user including the second user endpoint device;
determining an availability for the second user for the contact request; and
receiving acceptance of the contact request from the second user endpoint device.

18. The communication method of claim 17 further comprising at the first and second media service, verification of a necessary resource to complete the contact request.

19. The communication method of claim 17 wherein at the second media service the determining steps for the second user and the second user endpoint reveal no availability and further comprising processing the contact request as a pre-defined communication preference selected by the second user.

20. The communication method of claim 19 wherein the pre-defined communication preference comprises a hot rule.
